# EUROPEAN PATENT APPLICATION

(11) **EP 3 862 124 A1**
(43) Date of publication of application: **11.08.2021**
(21) Application number: 19886603.0
(22) Date of filing: 19.09.2019
(51) Int. Cl.: B23K 11/16, B23K 11/11

(54) **JOINT STRUCTURE AND METHOD FOR MANUFACTURING JOINT STRUCTURE**

(30) Priority: 19.11.2018 JP 2018216803
(71) Applicant: KABUSHIKI KAISHA KOBE SEIKO SHO (KOBE STEEL, LTD.), Hyogo 651-8585 (JP)
(72) Inventor: MAEDA Kyohei, Kanagawa 251-8551 (JP); SUZUKI Reiichi, Kanagawa 251-8551 (JP)
(74) Representative: Müller-Boré & Partner Patentanwälte PartG mbB
(86) International application number: PCT/JP2019/036845
(87) International publication number: WO 2020/105267

(57) **Abstract**

Provided is a joint structure with which cracking between a nugget and a corona bond after welding is less likely to occur, and a method for manufacturing the joint structure. In this joint structure (10) formed by performing resistance welding on a first member (11A) comprising a high strength steel and a second member (11B) superposed on the first member (11A) and comprising a high strength steel, a gap between the first member (11A) and the second member (11B) is greater than 0 mm and less than 3 mm and a nugget is not formed in the joint section of the first member (11A) and the second member (11B), or when a nugget is formed, the diameter D1 of the nugget satisfies the relationship D1 < 5 mm, and a decarburized layer (13) is provided on at least one of a superposition surface of the first member (11A) that superposes the second member (11B) and a superposition surface of the second member (11B) that superposes the first member (11A).

## Description

### TECHNICAL FIELD

The present invention relates to a joint structure and a method for manufacturing the joint structure.

### BACKGROUND ART

In recent years, in order to reduce the weight of a vehicle body and to enhance collision safety for the purpose of reducing the amount of CO₂ emissions, a high tensile strength steel (HTSS) sheet has been widely applied to a body frame of an automobile or the like. In addition, spot welding is mainly used in assembly of a vehicle body of an automobile, attachment of components, and the like, and is also applied to welding of a high tensile strength steel sheet.

A joint structure is formed by sandwiching and pressurizing high tensile strength steel sheets by a pair of upper and lower welding electrodes of a spot welding device, and energizing between the welding electrodes. In this case, a nugget is formed at a joint portion between the high tensile strength steel sheets, and a corona bond is formed around the nugget.

However, when resistance welding is performed in a state where there is a gap (referred to as a "gap" or a "sheet gap") between the high tensile strength steel sheets to be resistance welded, tensile stress is applied in a sheet thickness direction, so that cracks occur in the nugget and the corona bond after welding when the nugget is small or a hardness of the nugget is large.

Patent Literature 1 describes that, after a gap of a workpiece is eliminated by preheating, the workpiece is stopped, preliminary energization is performed to stabilize resistance between electrodes, a stop period is provided, and then main energization is performed by controlling a welding current so as to achieve a target heat amount, thereby preventing occurrence of welding failure even when there is a gap between workpieces.

Further, Patent Literature 2 describes that, prior to main energization, initial energization is applied to soften steel sheets to bring the steel sheets into close contact with each other, and a nugget having a sufficient diameter can be formed without causing scattering.

Further, Patent Literature 3 describes that, in spot welding of a high strength plated steel sheet, occurrence of a crack in a welded portion is prevented by: (a) setting a holding time after welding to a certain value or more and decreasing a welding energization time within a certain range; (b) performing post-energization under certain conditions after welding energization; (c) setting a holding time after welding to a certain value or more and increasing a pressing force within a certain range after welding energization; and (d) using a high strength plated steel sheet having a certain composition, setting a holding time after welding to a certain value or more, and performing welding.

### CITATION LIST

### PATENT LITERATURE

Patent Literature 1: JP-A-2002-96178
Patent Literature 2: JP-A-2016-41441
Patent Literature 3: JP-A-2003-103377

### SUMMARY OF INVENTION

### TECHNICAL PROBLEM

However, in Patent Literatures 1 and 2, since preliminary energization (initial energization) is performed, a tact time becomes long, which causes an increase in cost. In addition, no description is made on a nugget crack that occurs after welding.

In Patent Literature 3, an increase in a holding time increases a tact time, which causes an increase in cost. In addition, a limitation of a steel sheet component is not desirable because it is difficult to secure mechanical properties.

The present invention has been made in view of the problems described above, and an object of thereof is to provide a joint structure in which cracks in a nugget and a corona bond are less likely to occur after welding, and further cracks in a nugget and a corona bond are less likely to occur even when welding is performed in a state where there is a gap between high tensile strength steels to be welded, and a method for manufacturing the joint structure.

### SOLUTION TO PROBLEM

The above object of the present invention is achieved by the following configuration (1) related to a joint structure.
(1) Ajoint structure, comprising:
   a first member comprising a high tensile strength steel; and
   a second member comprising a high tensile strength steel and superposed on the first member, the first member and the second member being resistance welded to each other,
   wherein a gap between the first member and the second member is more than 0 mm and less than 3 mm,
   a nugget is not formed at a joint portion between the first member and the second member, or when the nugget is formed at the joint portion between the first member and the second member, a diameter D1 of the nugget satisfies D1 < 5 mm, and
   a decarburized layer is provided on at least one of a superposition surface of the first member, on which the second member is superposed, and a superposition surface of the second member, on which the first member is superposed.

   In addition, preferred embodiments of the present invention related to the joint structure relate to the following (2) and (3).
(2) The joint structure according to above (1), wherein a carbon amount of the high tensile strength steel of at least one of the first member and the second member is 0.35 mass% or more.
(3) The joint structure according to above (2), wherein a corona bond is formed around the nugget, and a diameter D2 of the corona bond satisfies D1 < D2 and D2 < 7 mm.
   In addition, an object of the present invention is achieved by the following configuration (4) related to a method for manufacturing the joint structure.
(4) A method for manufacturing the joint structure according to any one of above (1) to (3), comprising:
   superposing the second member on the first member so that the decarburized layer formed on a surface of at least one of the first member and the second member is interposed between the first member and the second member, and then
   resistance welding the first member and the second member by sandwiching and pressurizing the first member and the second member by a pair of electrodes and energizing between the pair of electrodes.

### ADVANTAGEOUS EFFECTS OF INVENTION

According to the joint structure of the present invention, when a gap between a first member and a second member is more than 0 mm and less than 3 mm, a nugget is not formed or the nugget is formed at a joint portion between the first member and the second member, a diameter D1 of the nugget satisfies D1 < 5 mm, and a decarburized layer is provided on at least one of the superposition surface of the first member, on which the second member is superposed, and the superposition surface of the second member, on which the first member is superposed, cracks in the nugget and the corona bond are less likely to occur after welding even when resistance welding is performed in a state where there is a gap between the first member and the second member before welding.

In addition, according to the method for manufacturing the joint structure of the present invention, when, after the second member are superposed on the first member so that the decarburized layer formed on the surface of at least one of the first member and the second member is interposed between the first member and the second member, the first member and the second member are resistance welded by sandwiching and pressurizing the first member and the second member by a pair of electrodes and energizing between the pair of electrodes, cracks in the nugget and the corona bond after welding can be prevented.

### BRIEF DESCRIPTION OF DRAWINGS

[FIG. 1A] FIG. 1A is a schematic cross-sectional view showing a state where a pair of high tensile strength steel sheets are superposed on each other before welding.
[FIG. IB] FIG. 1B is a schematic cross-sectional view showing a state where the pair of high tensile strength steel sheets in FIG. 1A are resistance welded.
[FIG. 1C] FIG. 1C is a schematic cross-sectional view showing a state where a nugget and a corona bond are formed by resistance welding of the pair of high tensile strength steel sheets in FIG. 1A.
[FIG. 2] FIG. 2 is a schematic view showing a state where high tensile strength steel sheets having a gap by sandwiching a spacer are resistance welded.

### DESCRIPTION OF EMBODIMENTS

Hereinafter, a joint structure and a method for manufacturing the same according to an embodiment of the present invention will be described in detail with reference to the drawings.

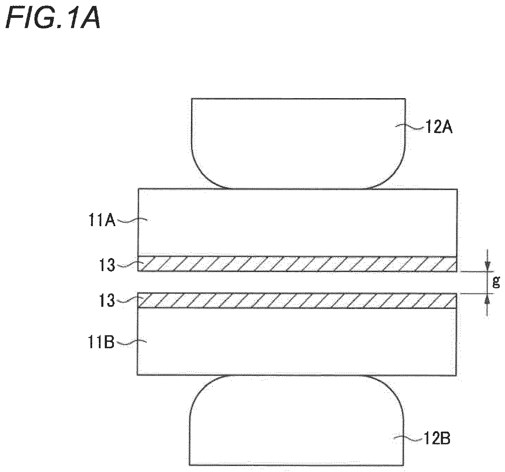

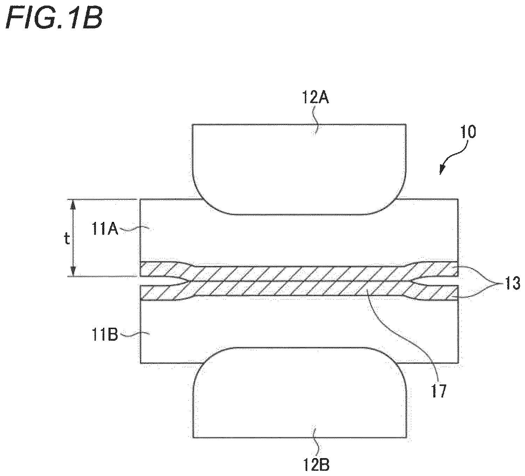

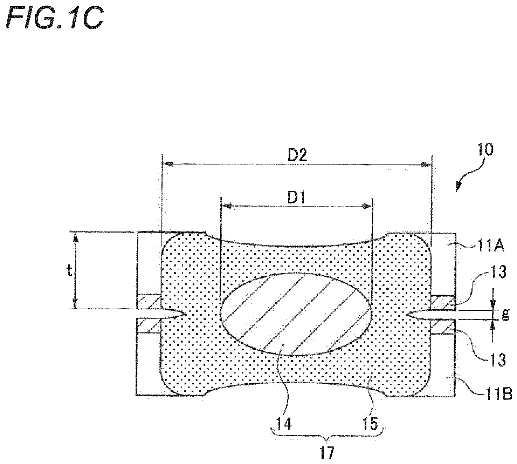

As shown in FIG. 1A, a joint structure 10 according to the present embodiment is formed by resistance welding (resistance spot welding) a plurality of (two in the embodiment shown in FIG. 1) high tensile strength steel sheets 11 (11A, 11B).

Specifically, as shown in FIG. 1B, the two superposed high tensile strength steel sheets 11A, 11B are sandwiched and pressurized by a pair of upper and lower welding electrodes 12A, 12B of a spot welding device, and the welding electrodes 12A, 12B are energized, whereby a contact portion of the high tensile strength steel sheets 11A, 11B is melted to form a joint portion 17. As a result, as shown in FIG. 1C, a nugget 14 is formed at the joint portion 17 between the high tensile strength steel sheets 11A, 11B, and a corona bond 15 is formed around the nugget 14.

In general, when the high tensile strength steel sheets 11 are welded in a state where there is a gap g between the steel sheets, tensile stress is applied in a sheet thickness direction, which may cause cracks in the nugget 14 and the corona bond 15 after welding, especially when the nugget 14 is small.

When welding is performed in a state where there is the gap g between the high tensile strength steel sheets 11A, 11B, scattering is likely to occur, and cracks are likely to occur in the nugget 14 and the corona bond 15. Therefore, in the high tensile strength steel sheets 11A, 11B according to the present embodiment, a structure of the nugget 14 and a structure of the corona bond 15 are softened at the time of welding, and thus cracks are less likely to occur. Therefore, cracks are prevented by providing a decarburized layer 13 on at least one of surfaces to be superposed.

Further, in the high tensile strength steel sheet, when a carbon amount (C amount) in the steel sheet is increased (for example, 0.35 mass% or more), a hardness of the nugget 14 formed by welding and a heat affected zone is increased. Therefore, since crack sensitivity of a welded portion is increased, there is a high possibility that cracks occur in the nugget 14 and the corona bond 15 after welding as described above. More specifically, when the high tensile strength steel sheets 11 having a high carbon amount are resistance welded to each other, the nugget 14 and the corona bond 15 have a hard and brittle structure, and a crack or peeling in the corona bond 15 that is solid-phase-bonded propagates to the nugget 14 to cause a crack.

Hereinafter, the high tensile strength steel sheet 11 used in the joint structure 10 according to the present embodiment will be described first.

A component amount of the high tensile strength steel sheet 11 is not particularly limited, but the high tensile strength steel sheet 11 preferably has strength of 590 MPa or higher. The high tensile strength steel sheet 11 may have strength of 780 MPa or higher, or 980 MPa or higher.

Hereinafter, a desirable range of content of each element (C, Si, Mn, P, S, and other metal elements) contained in the steel and a reason for limiting the range will be described below. It is noted that a % indication of the content of each element is all mass%. In addition, "∼" means that a value is equal to or more than a lower limit value and equal to or less than an upper limit value.

### [C: 0.05% ∼ 0.60%]

C is an element that contributes to improvement in base plate strength of steel, and is therefore an essential element for the high tensile strength steel sheet 11. Therefore, C content is preferably 0.05% or more. On the other hand, when C is added excessively, a hardness of a molten-solidified portion (nugget 14) and a pressure contact portion (corona bond 15) is increased, so that occurrence of a crack after welding cannot be prevented. Therefore, an upper limit of the C content is preferably 0.60% or less, more preferably 0.40% or less, and still more preferably 0.20% or less.

### [Si: 0.01% ∼ 3.00%]

Si is an element that contributes to deoxidation. Therefore, a lower limit of Si content is preferably 0.01% or more. On the other hand, when Si is added excessively, temper softening resistance is increased, and the hardness of the molten-solidified portion and the pressure contact portion is increased, so that the occurrence of a crack after welding cannot be prevented. Therefore, an upper limit of the Si content is preferably 3.00% or less, more preferably 2.00% or less, and still more preferably 1.00% or less.

### [Mn: 0.5% - 5.0%]

Mn is an element that contributes to improvement of hardenability, and is an essential element for forming a hard structure such as martensite. Therefore, a lower limit of Mn content is preferably 0.5% or more. On the other hand, when Mn is added excessively, the hardness of the molten-solidified portion and the pressure contact portion is increased, so that the occurrence of a crack after welding cannot be prevented. Therefore, an upper limit of the Mn content is preferably 5.0% or less, more preferably 2.5% or less, and still more preferably 2.0% or less.

### [P: 0.05% or less (not including 0%)]

P is an element inevitably mixed into steel, is likely to segregate into a grain and a grain boundary, and reduces the toughness of the molten-solidified portion and the pressure contact portion, and therefore, it is desirable to reduce P as much as possible. Therefore, an upper limit of P content is preferably 0.05% or less, more preferably 0.04% or less, and still more preferably 0.02% or less.

### [S: 0.05% or less (not including 0%)]

Similar to P, S is an element inevitably mixed into steel, is likely to segregate into a grain and a grain boundary, and reduces the toughness of the molten-solidified portion and the pressure contact portion, and therefore, it is desirable to reduce S as much as possible. Therefore, an upper limit of S content is preferably 0.05% or less, more preferably 0.04% or less, and still more preferably 0.02% or less.

### [Other Metal Elements]

For elements except for C, Si, Mn, P, and S, it is preferable that A1 is 1.0% or less (including 0%), N is 0.01% or less (including 0%), a total of Ti, V, Nb, and Zr is 0.1% or less (including 0%), a total of Cu, Ni, Cr, and Mo is 2.0% or less (including 0%), B is 0.01% or less (including 0%), and a total of Mg, Ca and REM is 0.01% or less (including 0%).

In addition, a balance is preferably Fe and an inevitable impurity. The inevitable impurity is an impurity that is inevitably mixed at the time of manufacturing steel, and may be contained within a range that does not impair various properties of steel.

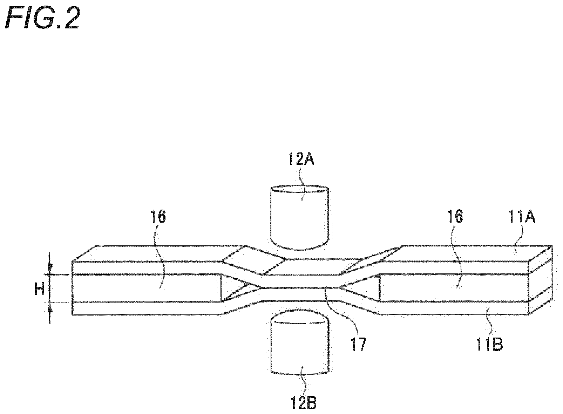

On the other hand, since the joint structure 10 according to the present embodiment includes the decarburized layer 13 on at least one of the superposition surfaces of the high tensile strength steel sheets 11A, 11B to be spot welded, a carbon amount component in the steel of the high tensile strength steel sheets 11A, 11B is diluted in the nugget 14, and the carbon amount of the nugget 14 becomes lower than the carbon amount of the high tensile strength steel sheets 11A, 11B. That is, the corona bond 15 and an end portion of the nugget 14 become soft, and the toughness is improved, so that a joined state having good peel strength is obtained, and the occurrence of a crack can be prevented even when welding is performed in a state where there is the gap g between the high tensile strength steel sheets 11A, 11B (see FIG. 2).

A thickness of the decarburized layer is determined by, for example, measuring a thickness of a layer containing ferrite, which is a main layer, using an optical microscope, an electron microscope, or the like for a sample immediately after decarburization treatment.

A structure of the decarburized layer 13 contains at least one of ferrite, bainite, and martensite. The softer the structure, the more difficult the decarburized layer is to crack. Therefore, it is more preferable that the decarburized layer 13 has a structure containing ferrite and containing any one of bainite and martensite, and even more preferable that the decarburized layer 13 has a structure containing ferrite and not containing bainite and martensite.

In order to effectively exhibit an effect of preventing a crack by forming the decarburized layer 13, a thickness of the decarburized layer 13 is set to 5 µm or more, preferably 20 µm or more, more preferably 35 µm or more, still more preferably 50 µm or more, and even more preferably 80 µm or more. However, when the thickness of the decarburized layer 13 becomes excessively thick, the tensile strength and fatigue strength are decreased. Therefore, the thickness of the decarburized layer 13 is set to 200 µm or less, preferably 180 µm or less, and more preferably 160 µm or less.

A metal plating film of zinc, a zinc alloy, or the like may be formed on the decarburized layer 13. In addition, these films may be coated with a single layer used alone or a plurality of layers combined in combination.

A Vickers hardness of the nugget 14 greatly affects the toughness of the nugget 14, and greatly affects the crack sensitivity. When the Vickers hardness of the nugget 14 is too high, the toughness is low, so that good peel strength cannot be obtained. Therefore, the Vickers hardness at the softest portion of the nugget 14 is preferably 700 Hv or less, more preferably 500 Hv or less, and still more preferably 350 Hv or less. However, since it is difficult to set the Vickers hardness at the softest portion of the nugget 14 to less than 200 Hv from the viewpoint of the characteristics of the steel sheet 11, it is preferable to set a lower limit of the Vickers hardness at the softest portion of the nugget 14 to 200 Hv.

In addition, the larger the diameter D1 of the nugget 14, the more difficult the nugget 14 is to crack. On the other hand, when the diameter D1 of the nugget 14 is too small, stress is less likely to be dispersed, and a crack is likely to occur after welding.

Here, as shown in results of Examples described later, when the diameter D1 of the nugget satisfies D1 > 5 mm, a crack is less likely to occur even when the decarburized layer 13 is not formed. On the other hand, in a case where the nugget 14 is not formed (that is, the diameter D1 of the nugget = 0 mm) or the nugget 14 is formed at the joint portion between the first member 11A and the second member 11B, and the diameter D1 of the nugget satisfies D1 < 5 mm, the nugget 14 and the corona bond 15 after welding are likely to crack when the decarburized layer 13 is not formed.

That is, in the joint structure 10 according to the present embodiment, when the nugget 14 is not formed or the nugget 14 is formed at the joint portion between the first member 11A and the second member 11B, and the diameter D1 of the nugget satisfies D1 < 5 mm, a remarkable effect of the decarburized layer 13 is exhibited.

Therefore, the effect by forming the decarburized layer 13 can be exhibited more sufficiently preferably when D1 < 4mm is satisfied, more preferably when D1 < 3mm is satisfied, still more preferably when D1 < 2mm is satisfied, and even more preferably when D1 < 1mm is satisfied.

In relation to the above-described condition of D1 < 5 mm, when a diameter D2 of the corona bond satisfies a condition of D2 < 7 mm, preferably D2 < 6 mm, and more preferably D2 < 5 mm, the effect by forming the decarburized layer 13 can be more sufficiently exhibited. The diameter D2 of the corona bond is naturally larger than the diameter D1 of the nugget (D2 > D1).

In the present embodiment, the resistance spot welding is performed in a state where the decarburized layer 13 is provided on at least one of the superposition surfaces of the high tensile strength steel sheets 11A, 11B, and welding is performed in a state where there is the gap g between the high tensile strength steel sheets 11A, 11B (the gap g is more than 0 mm) as a prerequisite for the welding. As shown in FIG. 1A, the gap g is a gap between the superposition surfaces at a welded portion, and spot welding may be performed in a state where there is the gap g between the high tensile strength steel sheets 11A, 11B due to a partial protuberance or the like around the welded portion of the steel sheet 11.

An upper limit of the gap g is less than 3 mm and preferably less than 2 mm because scattering is likely to occur when the gap g is too large. When the gap g is less than 3 mm, a crack can be prevented by applying the present embodiment even when local deformation is observed in the welded portion of the steel sheet 11, and local stress is generated in the vicinity of the corona bond 15.

A lower limit of the gap g is more than 0 mm, and is preferably 0.5 mm or more, and more preferably 1.0 mm or more so as to exhibit the effect of the present embodiment more significantly.

As described above, according to the joint structure 10 of the present embodiment, when the gap between the first member 11A and the second member 11B is more than 0 mm and less than 3 mm, the nugget 14 is not formed or the nugget 14 is formed at the joint portion between the first member 11A and the second member 11B, the diameter D1 of the nugget 14 satisfies D1 < 5 mm, and the decarburized layer 13 is provided on at least one of the superposition surface of the first member 11A, on which the second member 11B is superposed, and the superposition surface of the second member 11B, on which the first member 11A is superposed, cracks in the nugget 14 and the corona bond 15 are less likely to occur after welding even when resistance welding is performed in a state where there is the gap g between the first member 11A and the second member 11B before welding.

In addition, according to the method for manufacturing a joint structure of the present invention, when, after the high tensile strength steel sheet 11B are superposed on the high tensile strength steel sheet 11A so that the decarburized layer 13 formed on the surface of at least one of the high tensile strength steel sheets 11A, 11B is interposed between the high tensile strength steel sheet 11A and the high tensile strength steel sheet 11B, the high tensile strength steel sheet 11A and the high tensile strength steel sheet 11B are resistance welded by sandwiching and pressurizing the high tensile strength steel sheet 11A and the high tensile strength steel sheet 11B by the pair of electrodes 12A, 12B and energizing between the pair of electrodes 12A, 12B, cracks in the nugget 14 and the corona bond 15 after welding can be prevented.

### [Example]

In order to confirm the effects of the present invention, in the following Examples, Comparative Examples, and Reference Examples, two steel sheets 11 of Samples A1, A2, B1 and B2 shown in Table 1 were superposed and used, and presence or absence of peeling and a crack was confirmed after welding with the gap g under the following welding conditions.

For each of Steel S35C and S45C shown in Table 1, steel sheets (A2, B2) in which the decarburized layer 13 as a surface soft layer was formed on both surfaces of the steel sheets 11 and steel sheets (A1, B1) in which no decarburized layer was formed were prepared. Various thicknesses (depths) of the decarburized layer 13 were prepared for each of Steel S35C and S45C as shown in Tables 1 and 2. The decarburized layer 13 was formed under conditions of holding at a temperature of 700°C to 950°C for 15 minutes to 1 hour in an atmospheric furnace. A scale generated by heat treatment was removed by pickling treatment (pickling solution: 10% to 50% hydrochloric acid, temperature: 25°C to 82°C, pickling time: 20 seconds to 3600 seconds).

**[Table 1]**

| Sample No. | Steel | Sheet thickness t [mm] | Tensile strength (base plate strength) | Carbon amount [%] | Thickness of decarburized layer (ferrite layer) [µm] |
|---|---|---|---|---|---|
| A1 | S35C | 1.6 | 590 MPa | 0.35 | 0 |
| A2 | | | | | 54 |
| B1 | S45C | 1.6 | 590 MPa | 0.45 | 0 |
| B2 | | | | | 47 |

### (Welding Conditions)

A welding machine was an air pressure type single-phase alternating current welding machine, and both the upper and lower welding electrodes were dome radius type (DR electrode) chromium copper electrodes having a tip diameter of 6 mm (tip R40 mm). An amount of cooling water flowing through the welding electrode was 1.5 L/min both upper and lower. Hereinafter, other welding conditions will be described.

### • Energization Conditions

Pressure: 550 kgf
Current value: 5 kA to 9 kA
Energization time: 0.3 sec
Hold time: 0.16 sec

### • Gap

In Example 1, Example 2, Comparative Example 1, Reference Example 1, and Reference Example 2, the gap g was set to 1 mm, and in Examples 3 to 6, Comparative Examples 2 to 5, and Reference Example 3, the gap g was set to 2 mm. As shown in FIG. 2, for the gap g, a spacer 16 having a size of 40 × 40 mm and a sheet thickness of 1 mm or 2 mm was sandwiched between the high tensile strength steel sheets 11A, 11B having a size of 125 × 40 mm at both ends, and the high tensile strength steel sheets 11A, 11B and the spacer 16 were clamped to set the gap g. Therefore, the gap g mentioned here is a sheet thickness H of the spacer.

### (Confirmation of Presence or Absence of Peeling and Crack)

In the joined structure 10 after welding, presence or absence of peeling was confirmed by visually observing an appearance of a welded portion. The term "peeling" refers to a state where the high tensile strength steel sheets 11A, 11B are not joined to each other and are completely separated from each other. Further, when no peeling was confirmed, the presence or absence of a crack was confirmed by an X-ray radiographic test and cross section macro observation. A cross-sectional macro observation position was a plane parallel to a joint longitudinal direction. The presence or absence of a crack was confirmed without etching, and a diameter of a nugget was measured by etching with a picric acid saturated aqueous solution.

Table 2 collectively shows diameter D1 of nugget, diameter D2 of corona bond, and "presence or absence of peeling and crack" as evaluation results of the test performed by changing the depth of the decarburized layer 13 of the high tensile strength steel sheets 11A, 11B and the gap g between the high tensile strength steel sheets 11A, 11B.

**[Table 2]**

| | First member (upper sheet) | | Second member (lower sheet) | | Gap g [mm] | Current value [kA] | Diameter D1 of nugget [mm] | Diameter D2 of corona bond [mm] | Presence or absence of peeing and crack |
|---|---|---|---|---|---|---|---|---|---|
| | Sample No. | Thickness of decarburized layer [µm] | Sample No. | Thickness of decarburized layer [µm] | | | | | |
| Example 1 | A2 | 54 | A2 | 54 | 1 | 7 | 0 | 5.89 | No |
| Example 2 | | | | | 1 | 8 | 3.90 | 6.67 | No |
| Example 3 | | | | | 2 | 7 | 0 | 5.50 | No |
| Example 4 | | | | | 2 | 8 | 3.24 | 6.39 | No |
| Comparative Example 1 | A1 | 0 | A1 | 0 | 1 | 7 | 3.30 | - | Yes |
| Reference Example 1 | | | | | 1 | 8 | 5.30 | - | No |
| Reference 2 Example | | | | | 1 | 9 | 6.67 | - | No |
| Comparative Example 2 | | | | | 2 | 7 | 2.24 | - | Yes |
| Comparative Example 3 | | | | | 2 | 8 | 4.70 | - | Yes |
| Example 5 | B2 | 47 | B2 | 47 | 2 | 5 | 1.28 | 5.78 | No |
| Example 6 | | | | | 2 | 6 | 3.30 | 6.00 | No |
| Comparative Example 4 | B1 | 0 | B1 | 0 | 2 | 5 | 2.83 | - | Yes |
| Comparative Example 5 | | | | | 2 | 6 | 3.89 | - | Yes |
| Reference Example 3 | | | | | 2 | 7 | 5.36 | - | No |

As shown in Table 2, it can be seen that the joint structures 10 of Examples 1 to 6 in which the high tensile strength steel sheets 11 having the decarburized layer 13 on the joint surface are welded to each other all have no crack or peeling regardless of a size (1 mm or 2 mm) of the gap g, and a good joint structure 10 can be obtained.

On the other hand, in the joint structures 10 of Comparative Examples 1 to 5 in which the high tensile strength steel sheets 11 having no decarburized layer 13 on the joint surface were welded to each other, a crack or peeling was confirmed after welding, regardless of the size of the gap g.

As can be seen from Reference Examples 1 to 3, when the diameter D1 of the nugget was 5 mm or more, a crack or peeling was not confirmed after welding even when the decarburized layer 13 was not formed. As can be seen from, for example, Comparative Example 1, when the diameter D1 of the nugget was less than 5 mm, a crack or peeling was confirmed after welding unless the decarburized layer 13 was formed.

On the other hand, as can be seen from, for example, Example 1 and Example 2, in the case where the decarburized layer 13 was formed, a crack or peeling was not confirmed after welding even when the diameter D1 of the nugget was less than 5 mm.

From this, it was experimentally shown that when the nugget 14 was not formed or the nugget 14 was formed at the joint portion between the first member 11A and the second member 11B, and the diameter D1 of the nugget satisfied D1 < 5 mm, the effect of the present invention was remarkably exhibited.

The present invention is not limited to the embodiments described above, and modifications, improvements, or the like can be made as appropriate. For example, in the above description, welding of the two high tensile strength steel sheets 11A, 11B has been described, but the number of high tensile strength steel sheets is not limited to two, and the same applies to welding of two or more high tensile strength steel sheets.

Although the embodiments are described above with reference to the drawings, it is needless to say that the present invention is not limited to such examples. It will be apparent to those skilled in the art that various changes and modifications may be conceived within the scope of the claims. It is also understood that the various changes and modifications belong to the technical scope of the present invention. Constituent elements in the embodiments described above may be combined freely within a range not departing from the spirit of the present invention.

The present application is based on Japanese Patent Application (Japanese Patent Application No. 2018-216803) filed on November 19, 2018, and contents thereof are incorporated herein by reference.

### REFERENCE SIGNS LIST

10 Joint structure
11 High tensile strength steel sheet
11A High tensile strength steel sheet (first member)
11B High tensile strength steel sheet (second member)
12A, 12B Electrode
13 Dearburized layer
14 Nugget
15 Corona bond
16 Spacer
17 Joint portion
D1 Diameter of nugget
D2 Diameter of corona bond
g Gap
t Sheet thickness

## Claims

1. A joint structure, comprising:
a first member comprising a high tensile strength steel; and
a second member comprising a high tensile strength steel and superposed on the first member, the first member and the second member being resistance welded to each other,
wherein a gap between the first member and the second member is more than 0 mm and less than 3 mm,
a nugget is not formed at a joint portion between the first member and the second member, or when the nugget is formed at the joint portion between the first member and the second member, a diameter D1 of the nugget satisfies D1 < 5 mm, and
a decarburized layer is provided on at least one of a superposition surface of the first member, on which the second member is superposed, and a superposition surface of the second member, on which the first member is superposed.

2. The joint structure according to claim 1, wherein a carbon amount of the high tensile strength steel of at least one of the first member and the second member is 0.35 mass% or more.

3. The joint structure according to claim 1 or 2, wherein a corona bond is formed around the nugget, and a diameter D2 of the corona bond satisfies D1 < D2 and D2 < 7 mm.

4. A method for manufacturing the joint structure according to claim 1 or 2, comprising:
superposing the second member on the first member so that the decarburized layer formed on a surface of at least one of the first member and the second member is interposed between the first member and the second member, and then
resistance welding the first member and the second member by sandwiching and pressurizing the first member and the second member by a pair of electrodes and energizing between the pair of electrodes.
